Europäisches Patentamt

European Patent Office

Office européen des brevets

(11) Publication number: **0 444 573 A1**

# EUROPEAN PATENT APPLICATION

(21) Application number: **91102734.0**

(22) Date of filing: **25.02.91**

(51) Int. Cl.⁵: **B29D 30/46**, B29D 30/30

(30) Priority: **26.02.90 IT 1949290**

(43) Date of publication of application:
**04.09.91 Bulletin 91/36**

(84) Designated Contracting States:
**DE ES FR GB GR**

(71) Applicant: **PIRELLI COORDINAMENTO PNEUMATICI Società per Azioni Piazzale Cadorna, 5**

**I-20123 Milan(IT)**

(72) Inventor: **Lacagnina, Claudio
Via Dell'Acqua, 18/2
I-Busto Arsizio (VA)(IT)**

(74) Representative: **Giannesi, Pier Giovanni et al
Pirelli S.p.A. Direzione Brevetti Piazzale
Cadorna, 5
I-20123 Milano(IT)**

(54) **Device for cutting to size tread strips for vehicle tires, and cutting process actuated by said device.**

(57) A device (1) for cutting the end from a tire tread strip (3) having at least one cutting unit (4,22). When there are two cutting units (4,22) they may be positioned at a desired distance from each other and arranged for simultaneously cutting the opposite ends of a tread strip (3) arranged on a workbench (2,23). Each cutting unit (4,22) comprises a heated blade (5) which extends through a slit (11) in a transverse direction in the workbench (2,23) and moveable horizontally along the slit (11) itself in order to cut the tread strip (3) in a transverse sense. During the execution of the cut the tread strip (3) is held against the workbench (2,23) by means of a plate-like fastening element (14) which extends in a direction parallel to the slit (11) and very close to it. To the blade (5) there are connected a pressure roller (17) and a pressure sphere (18), one on each side of the cut, which operate in an elastic pushing relationship against the top of the tread strip (3) with the pressure sphere (18) moving between the tread strip (3) and the plate-like fastening element (14), to produce a pressure localized on the tread strip (3) itself in the vicinity of the cutting edge (5a) of the blade (5).

FIG 1

The present invention relates to a device for cutting to size tread strips for vehicle tires and a cutting process actuated by said device. The device is of the type comprising a substantially horizontal workbench on which a tread strip being processed is arranged and a cutting unit having a heated blade mounted for movement through the tread strip for cutting it in a transverse sense.

As is known, in the manufacture of vehicle tires there is applied on the tire carcass during its preparation a so-called tread strip, comprising by a strip of elastomeric material of appropriate dimensions, with the opposite ends cut at an angle, that is, with a bevel, which, when the strip is wound around the circumference of the carcass the bevels on the ends are joined perfectly to overlap each other and form a smooth joint.

The production of tread strips generally involves the extrusion of a continuous strip in elastomeric material, immediately cooled by means of a suitable refrigerant, from which, downstream from the refrigerant, a plurality of sections are cut, each section having a length greater than the circumference of the tire to be manufactured. The sections thus obtained are deposited in magazines from which they are then taken when needed to pallets arranged in the proximity of the tire manufacturing machines, usually with one pallet for each machine, and are here cut to size and applied to the tires during their manufacture.

Currently, the cutting operations on the above sections or tread strips are executed by means of cutting units provided with a heated blade which extends horizontally over a workbench and is translatable, substantially like a guillotine, in the direction of the workbench itself so as to transversely cut the tread strip previously arranged on the workbench.

It has been observed that the execution of the cut in the manner described above raises a number of problems.

In the first place, it is observed that, in a number of cases, especially when the article being manufactured has a fairly large thickness, the heated blade undergoes too strong a cooling process at its cutting edge as it sinks into the elastomeric material, causing undesired inaccuracies in the execution of the cut. This is essentially due to the fact that the blade, by operating simultaneously across the entire width of the tread strip, offers a large surface over which the heat exchange with the elastomeric material can take place and is thus subject to quick cooling especially at its cutting edge, where the blade is very thin.

Due to this quick cooling of the blade and due to the fact that the operation is executed on a section which has been subjected to a certain aging process, the cut becomes somewhat difficult and in particular it causes a compression and a stretching of the elastomeric material in the cutting area, including the forced movement of the material along the direction of the cut, which, as already mentioned above, follows an oblique path with respect to the perpendicular direction of the section (bevel cut) and thus has a length which is greater than the thickness of the above section.

The consequence of all this is an irregular cutting area, with ragged and poorly defined edges, having a thready surface (the surface acquires a so-called "hairy" look) which makes it difficult to attain a perfect adhesion between the two extremities of the section, while the resistance of the junction to aging becomes less reliable when the tire is in operation.

The reliability of this junction is further jeopardized by the fact that the cut to size can be executed at only one extremity of the section so that the freshly-cut surface must be joined with the surface already aged of the cut executed previously immediately after a straining of the strip.

In fact the execution of two cuts to size on the section, with the simultaneous use of two guillotine shears, involves problems of a qualitative character related to the section due to the deformations caused by the cutting operation and problems of a mechanical and process character due to the impossibility of installing two shearing units of this type on the same pallet, due to the considerable size of these devices against the limited space available, determined by the length of the tire strip section (of the order of some 1.5 meters) and by the vicinity of the machine manufacturing the tires.

The main object of the present invention is substantially that of solving the problems of the prior art, by making a device designed so that its blade or blades are not subjected to an excessive cooling action during the execution of the cut and to execute the cut simultaneously on both ends of the tread strip.

The innovative solution of the present invention comprises having the blade execute the cut by passing through the tread strip while the blade is in a generally vertical sense, so as to have reduced surfaces of contact, and thus of heat exchange, with the elastomeric material. But, ahead of this innovative solution, the technical problem also exists of adopting a cutting process ensuring the stability of the tread strip on the workbench, as well as a perfect execution of the cut over the entire cross-section of the strip itself, and on both extremities of said strip, so as to accomplish a process for the manufacture of vehicle tires with the result that the junctions of the tread strips are solid and stable over time and during the operation of the tire.

This technical problem is solved by means of a device for cutting to size tread strips for vehicle tires, characterized in that said cutting unit comprises: a control block that is transversely moveable with respect to the workbench in a substantially horizontal direction and rigidly supports said blade. The blade traverses the workbench along a slit extending along the direction of the control block's displacement. Means for clamping are arranged to operate on the tread strip at said slit so as to fasten the strip itself against the workbench during the movement of the blade. Pressure means operate along said slit and are arranged so as to be displaced by the control block together with said blade to produce a pressure localized on the tread strip in the vicinity of a cutting edge of the blade itself.

Further characteristics and advantages of the present invention can be seen more clearly from the detailed description of a preferred but not exclusive embodiment of a device and corresponding process for the cutting to size of tread strips for vehicle tires, according to the present invention.

The description made hereafter is with reference to the enclosed drawings which are provided only as an example and not with any limiting intent, wherein:

Fig. 1  is a diagrammatic top plan view showing a device for cutting both ends of a tread strip at the same time;

Fig. 2  is an cross-section of the device of Figure 1, taken along the line II-II thereof;

Fig. 3  shows perspective view, partially in section of one of the cutting units provided in the above device.

With reference to the figures, numeral 1 generally indicates the device for cutting to size tread strips for vehicle tires, according to the present invention.

The device 1 comprises a substantially horizontal workbench 2, partially shown in the enclosed figures, on which, aligned with the longitudinal axis of the same workbench, there is arranged a tread strip 3 being processed.

With the workbench 2 there is operationally associated a cutting unit, generally indicated by numeral 4, provided with a heated blade 5, moveable through the tread strip 3 so as to cut it in its transverse direction. More particularly, the cut is executed along a plane at an angle with respect to the vertical and along a direction oblique with respect to the length of the tread strip 3.

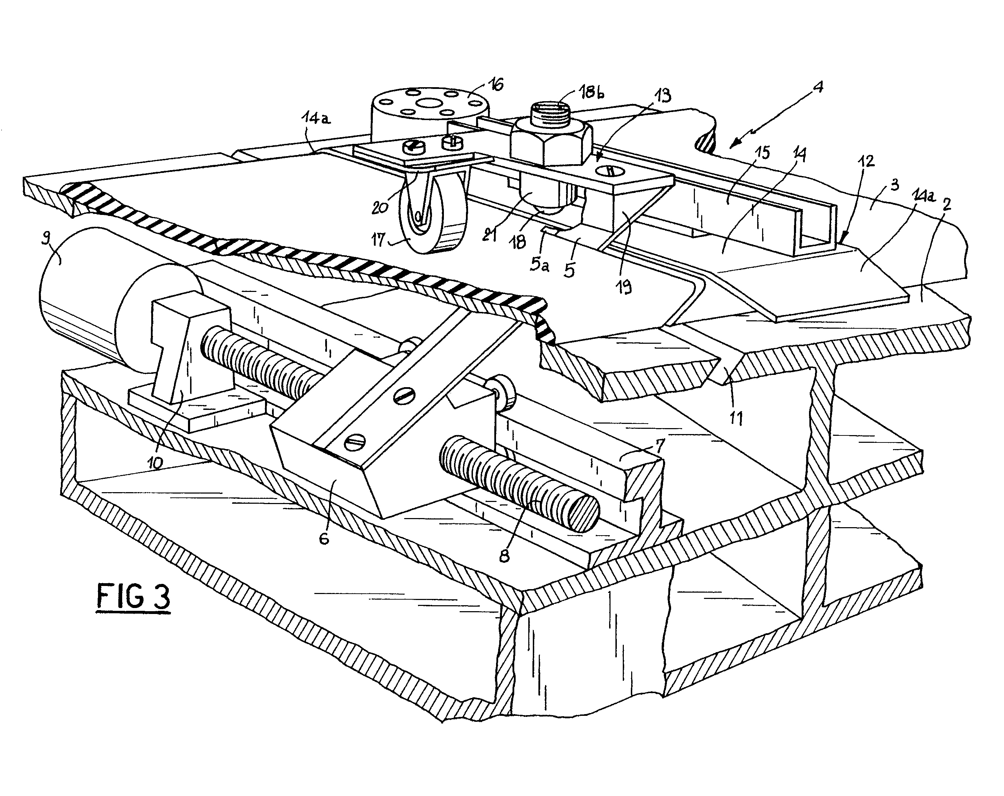

According to the present invention, as better shown in Fig. 3, the blade 5 is rigidly supported by a control block 6 which is transversely moveable with respect to the workbench 2 along a substantially horizontal direction. More particularly, the block 6 is positioned under the workbench 2 and is slidably engaged along at least one guide bar 7 which extends along the direction of the cut to be executed. The movement of the block 6 is obtained by means of a worm screw 8 rotated by a gearmotor 9 and rotatably engaged between two support brackets 10, only one of which is illustrated, rigidly connected with respect to workbench 2.

Blade 5 traverses workbench 2 along a slit 11 in the bench itself extending along the direction of displacement of control block 6, so as to cut the tread strip 3 through its thickness and passing through it transversely.

Associated with the cutting station 4 there are also clamping means 12 arranged to operate on the tread strip 3 at the slit 11 so as to fasten the strip itself against the workbench 2 during the movement of the blade 5, as well as pressure means 13 arranged so as to produce a pressure localized on the tread strip in the immediate vicinity of cutting edge 5a of blade 5 on both parts of said blade and suitable for being displaced on said strip together with and in a direction parallel to said blade, so as to prevent localized deformations of the strip consequent upon the cutting action.

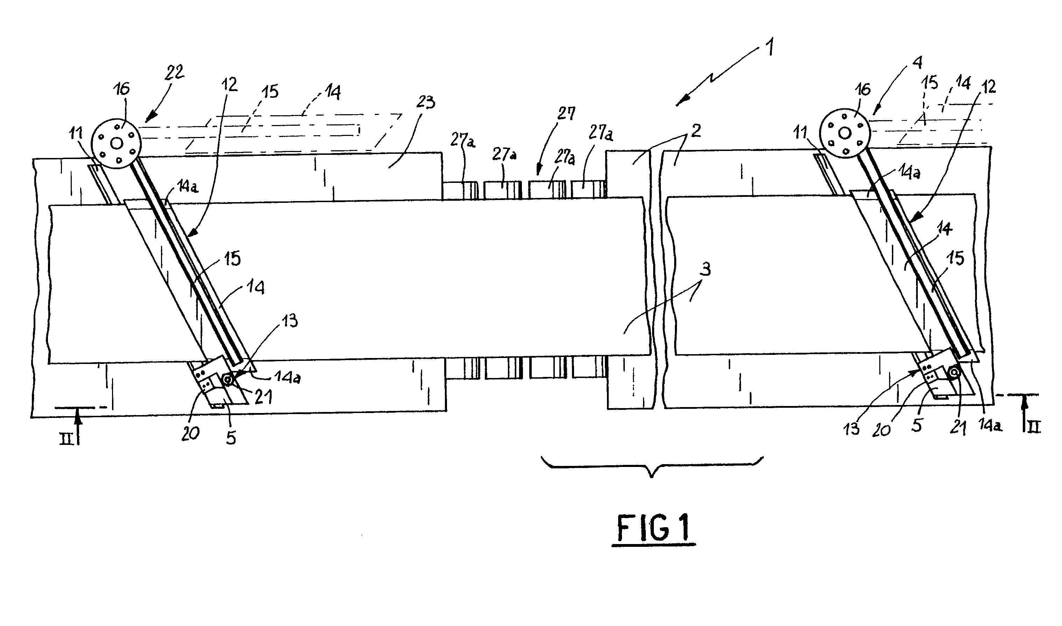

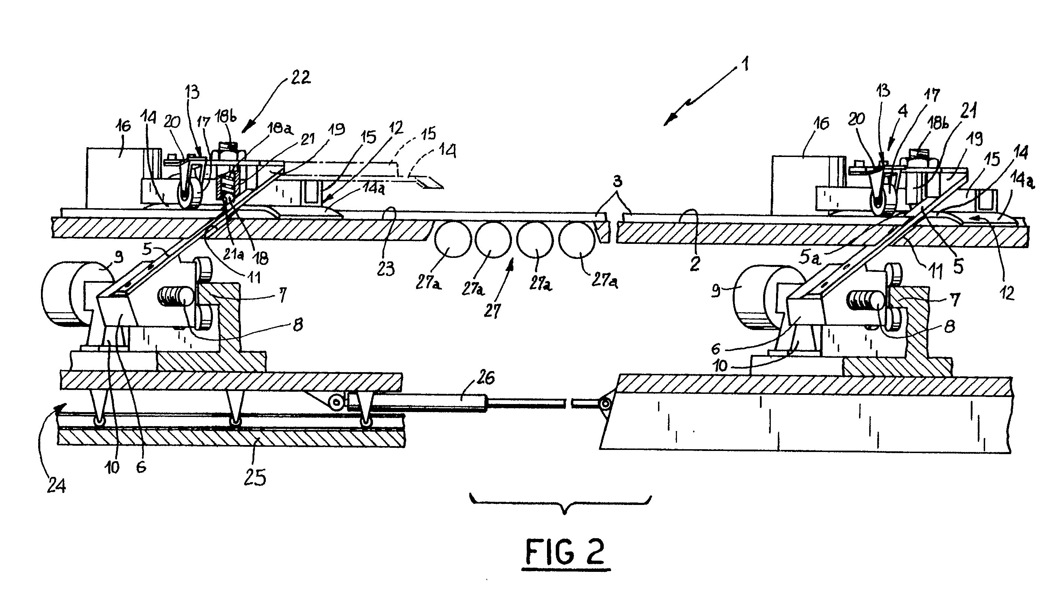

The clamping means 12 comprise a plate-like fastening element 14, preferably in an elastically deformable metal material, mounted under a supporting arm 15 with one of its extremities operatively connected to an actuating device 16 arranged to one side with respect to the workbench 2 and operating so as to move the plate-like element 14 from a rest condition wherein, as represented by a dotted line in Figures 1 and 2, it is raised from and displaced to one side of the workbench 2, to an operational condition wherein, as indicated with a continuous line in the drawings, it is pushed against tread strip 3 and extends very close to slit 11, in a direction parallel to same. The actuating device 16 is only schematically illustrated and shall not be described in detail as it may be accomplished according to several known methods, for example, by the connection of an electromagnet and a rotating fluid-dynamic actuator, arranged to raise and displace to one side, respectively, the arm 15.

The pressure means 13 essentially comprises a pressure roller 17 and a pressure sphere 18 operatively connected to an auxiliary block 19 rigidly connected to blade 5 above tread strip 3. More accurately, pressure roller 17 is mounted, rotatably on an axis perpendicular to the length of slit 11, to an elastic plate 20 which is rigidly engaged with auxiliary block 19 and which elastically pushes the roller itself towards tread strip 3, close to the cutting edge 5a opposite plate-like element 14.

The pressure sphere 18 is rotatably housed in a seat in the lower extremity 21a of a bush 21 fastened to the auxiliary block 19 and operatively housing a compression spring 18a which pushes the sphere downwards. The preload of spring 18a is preferably adjustable by means of a threaded set screw 18b operatively engaged with the bush 21 and on which the spring itself acts as in an abutment.

As can be seen from the enclosed figures, the pressure sphere 18 is positioned adjacent to the side of the cutting edge 5a facing the plate-like element 14 and exerts a pushing action against the plate-like element itself when the latter is in the operative position.

Preferably, the plate-like element 14 has two sections of extremities 14a, at respectively opposite ends, bent back at an angle towards workbench 2 to facilitate the upward movement of pressure sphere 18 on the plate-like element itself at the beginning of the cutting action.

According to a further characteristic of the present invention, the device 1 may optionally include an auxiliary cutting unit, indicated in a general way at 22 in Figs. 1 and 2, operationally associated with an auxiliary workbench 23 aligned in the same plane as workbench 2 and subjected to the action of adjustment means 24 arranged to move it closer to and further away from workbench 2 to adjust the reciprocal distance between cutting unit 4 and auxiliary cutting unit 22. The auxiliary cutting unit 22 is structured in a substantially similar manner to that described with reference to cutting unit 4. A detailed description of the auxiliary cutting unit 22 is therefore considered superfluous. The elements comprising it are indicated, in the drawings, with the same numerical references adopted for the components of cutting unit 4 described above.

The adjustment means 24 provide for an auxiliary workbench 23 (Fig. 2) to be slidably mounted on a guiding frame 25 which allows it to be moved closer to and further away from the workbench 2. There is also an actuator 26, having, for example a fluid-dynamic drive, operationally connected with the workbench 2 and with the auxiliary workbench 23 to determine the adjustment of the latter's position on the guiding frame 25.

There is also provision for the use of an extensible roller table 27 equipped with a plurality of idle rollers 27a which support the tread strip 3 in the area included between workbench 2 and auxiliary workbench 23. The roller table 27, schematically represented in the drawings, is itself known and is thus not described further. It should, however, be pointed out that roller table 27 is designed so as to increase or decrease the number of rollers 27a between workbenches 2 and 23 simultaneously with the reciprocal displacement of same, so as to adapt itself to support the tread strip 3 independently of the reciprocal distance between the workbenches themselves. It should be pointed out that the roller table 27 is the object of an european patent application number 90118000.0, filed on 19.09.1990 by the same assignee, to which reference is made for any further clarification and the disclosure of which is hereby specifically incorporated by reference.

Method of Operation According to a novel cutting process which is a part of the present invention, the operation of the device described above, in relation to the structure disclosed herein, is as follows.

Given that, by means of the fluid-dynamic actuator 26, the distance between cutting units 4 and 22 has already been adjusted in relation to the length to which the tread strips 3 are to be cut, it is first of all provided for that the tread strip to be cut is to be positioned on workbenches 2 and 23, so that the opposite ends of a tread strip are over slit 11 in each table.

At this point the plate-like elements 14, initially in the rest position, are moved to their operative positions by the actuating devices 16, to execute the fastening of the tread strip 3 to the workbenches 2, 23. Due to the action of gearmotors 9, the cutting blades 5, heated in a conventional manner by means of electrical resistances associated with them, are made to translate horizontally along their respective slits 11, so as to cut the tread strip 3.

To advantage, given that each blade 5 is arranged to cut the tread strip 3 through its thickness, there is a limited contact surface and, thus, a limited heat exchange between the blade and the tread strip itself. The blade 5 thus gives up its heat very slowly to the elastomeric material constituting the tread strip 3. In addition, the heat taken from the blade in the areas of contact with the tread strip 3 is replaced along the way by the heat coming from the remaining parts of the blade itself, transmitted by conduction to the above contact surfaces, which consequently maintain an almost constant temperature throughout the execution of the cut.

To advantage, during the execution of the cut, localized pressure is also exerted on the tread strip 3 by the pressure roller 17 and by the pressure sphere 18, in the areas immediately adjacent to the opposite sides of the cutting edge 5a of blade 5. It should be noted in this respect that the use of the pressure sphere 18 represents an original and advantageous solution for transmitting a localized pressure to the tread strip 3 in spite of the presence of the plate-like element 14 very close to the cutting area. In fact, the sphere 18 is used to act on a substantially punctiform area of the plate-like element 14 exerting on it a high specific pressure: on the other hand, due to the effect of the elasticity of the plate-like element itself, such pressure is suitably distributed on tread strip 3, with a reduced value so as to maintain a localized action but without the occurrence of deformation effects which would otherwise be caused on the strip by the above punctiform pressure. In turn, roller 17 transmits its pressure action directly to the tread strip 3, along a substantially linear contact area. At the end of the execution of the cut and of the simultaneous pressure localized on tread strip 3, the plate-like fastening elements 14 are returned to the rest position, the cut off end scraps of the section are removed from the workbench and the tread strip, cut to size, and slid over said workbenches 2 and 23, can be fed to an adjacent machine for manufacturing tires.

In the preceding description of the operation of the device it has been assumed that the cutting process is executed simultaneously at both the ends of tread strip 3. Obviously, the device being described can also be used to execute the cut on just one end or at just one end at a time.

But, as shall be seen, the above operating process characterized by the simultaneous cut of both the sections extremities is very advantageous as far as the quality of the final tire is concerned.

As is known, the general process for the manufacture of tires provides for the preparation of a carcass in the shape of cylindrical sleeve over a suitable production drum, for the separate preparation of the tread strip by reducing to the required size, that is, to the pre-set length, a section of elastomeric material previously cut to a length greater than that of the strip, for the conformation of the above carcass to a toroidal shape, assembling with it the further elements that are needed such as the sidewalls, the reinforcement edges and the intermediate belt, and in particular assembling with the above toric shaped carcass the above-mentioned tread strip, welded in the shape of a ring by means of a head-to-head joint of the two opposite beveled ends.

According to the prior art, as already discussed, when the beveled ends are about to be jointed, either directly to the carcass or on a suitable auxiliary drum, only one of the ends was freshly cut, but sometimes beveled ends had already been cut previously and thus the corresponding surfaces to be jointed were subjected to a certain degree of aging.

In spite of the measures taken (rasping with a metal brush and application of a solvent) to enhance the stickiness of the above surfaces and thus their reciprocal weldability, the result was still a joint of the tread strip which in time tended to open up, with consequent risk for the user, grave damage to the tire and a shortened life.

The present invention solves the problems described above.

It is in fact seen that the above device is designed to ensure the maintenance of a suitable temperature in the proximity of the blade's cutting edge during the execution of the cut. It should be noted in this respect that, should the blade's cutting edge cool too much by the end of the cutting stage, the tread strip obtained would have imperfections in the bevel cut at only the proximity of one of its side edges, that is in an area where the stresses consequent on the use of the finished tire are fairly limited. Moreover the above device and process allow a prefect execution of the cut in spite of the fact that the penetration of the blades into the strip occurs in a transverse sense.

It should also be considered that the above device and process solve all the problems arising, in the prior art, by the impossibility of executing the cut on both the ends of the tread strips.

In fact, the process according to the invention prepares a tread strip of the required length starting from a section of elastomeric material having a greater length than needed and executing on the section two simultaneous cuts, one on each end thereof.

In this way even when the section has been subjected to a considerable aging period, the process of the invention still allows the jointing between them of the freshly-cut surfaces and thus to obtain a solid joint which is stable over time.

It is understood that this invention is not limited to the embodiment described above or to changes occurring to those skilled in the art, but only by appended claims.

## Claims

1. A device for cutting to size tread strips for vehicle tires comprising:
   - a substantially horizontal workbench (2) on which a tread strip (3) having an end to be cut is positioned;
   - a first cutting unit (4) having a heated blade (5) mounted for movement through the tread strip for cutting it in a transverse sense; said first cutting unit comprising:
   - a control block (6) rigidly supporting said blade and moveable transversely with respect to the workbench along a substantially horizontal direction, said control block traversing the workbench at a slit (11) which extends transversely across the workbench and along the direction of displacement of the control block;
   - clamping means (12) adjacent said slit and positioned to hold the tread strip at said slit so as to fasten the strip against the workbench during the movement of the blade;

- pressure means (13) operating along said slit and arranged so as to be displaced by the control block together with said blade, said pressure means producing a pressure localized on the tread strip in the vicinity of a cutting edge of the blade.

2. A device according to claim 1, in which said control block is arranged under the workbench (2) and is slidably engaged along at least one guide bar (7) which extends substantially parallel to said slit.

3. A device according to claim 2, in which said control block is operatively engaged by a worm screw (8) rotatably supported by at least one support bracket (10) integral with the workbench and a motor (9) connected to rotatably operate the worm screw to determine the translation of the control block and the cutting blade along said slit.

4. A device according to claim 1, in which said clamping means (12) comprises a plate-like fastening element (14) mounted under a supporting arm (15) operatively connected to an actuating device (16) which displaces the plate-like element from a rest condition wherein it is raised from and displaced to one side of the workbench, to an operative condition wherein it is pushed against the tread strip and extends close to said slit, in a direction parallel thereto.

5. A device according to claim 1, in which said pressure means (13) comprises: an auxiliary block (19) rigidly connected to the blade above the tread strip; at least one pressure roller (17) rotatably connected to the auxiliary block on an axis generally perpendicular to said slit; means for elastically pushing the pressure roller against the tread strip in a position adjacent to the cutting edge of the blade and on a side opposite to said plate-like element; at least one pressure sphere (18) rotatably connected to the auxiliary block and mounted to elastically push downwardly against the plate-like element when the plate-like element is in the operative condition.

6. A device according to claim 5, in which said pressure roller (17) is rotatably connected to an elastic element (20) which is carried by said auxiliary block.

7. A device according to claim 5, in which said pressure sphere (18) is rotatably housed in a seat on a bush (21) which houses a pre-load spring (18a) arranged so as to push the sphere against the plate-like element.

8. A device according to claim 1, including an auxiliary cutting unit (22) substantially similar to said first cutting unit and operatively associated with an auxiliary workbench (23) aligned in the same plane as said workbench (2); adjustment means (24) between said auxiliary workbench and said workbench to adjust the reciprocal distance between said first and auxiliary cutting units.

9. A device according to claim 8, in which said adjustment means comprises a guiding frame (25) which slidably supports the auxiliary workbench and a fluid-dynamic actuator (26) operatively connected with the auxiliary workbench.

10. A device for cutting to size an elongate tread strip for a vehicle tire comprising:
    - a workbench (2) having a substantially horizontal elongated upper surface on which a tread strip (3) having an end to be cut is positionable;
    - a slit (11) extending transversely diagonally across said elongate upper surface;
    - a first cutting unit having:
      (a) a heated blade (5) supported underneath said workbench upper surface and projecting upwardly through said slit;
      (b) block means (6) supporting said heated blade (5) so as to be non-perpendicular to the horizontal upper surface of said workbench (2) so that when a tire strip is cut, the cut end surface will be beveled;
      (c) means (7) for moving said block means (6) and said heated blade (5) along said slit so that said blade cuts transversely through the thickness of a tread strip (3) on said upper surface;
    - clamping means (12) adjacent one side of said slit and positioned to hold the tread strip at said slit so as to prevent movement of said tread strip during cutting thereof;
    - auxiliary block means (13) carried by the upper end of said blade, said auxiliary blocks means having two downwardly biased pressure rollers (17, 18), one on each side of said slit, one roller (17) bearing down on an upwardly facing surface of a tire strip and the other (18) bearing down on an upwardly facing surface of said clamping means.

11. A process for cutting to size tread strips for vehicle tires, comprising the following steps:

a) positioning a tread strip (3) to be cut on a workbench (2) provided with at least one transverse slit (11);

b) fastening the tread strip to the workbench by means of at least one plate-like element (14) which extends in a direction parallel to the slit and very close to it;

c) cutting the tread strip by means of a heated blade (5) extending through said slit, said blade translating in a substantially horizontal sense along the slit;

d) exerting a localized pressure on the upper surface of the tread strip in a position adjacent to the opposite sides of the cutting edge of the blade while the blade translates along said slit to execute the cutting step.

12. A process for cutting to size tread strips for vehicle tires, in which on each end of said tread strip the steps are executed, said process comprising:

a) positioning a tread strip (3) to be cut on a workbench (2) provided with at least one transverse slit;

b) fastening the tread strip to be cut on the workbench by means of at least one plate-like element (14) which extends in a direction parallel to the slit and very close to it;

c) cutting the tread strip by means of a heated blade extending through said slit, said blade translating in a substantially horizontal sense along the slit itself;

d) exerting a localized pressure on the tread strip in a position adjacent to the opposite sides of the cutting edge of the blade while the latter translates along said slit to execute the cutting step.

13. A process for the manufacture of vehicle tires provided with a carcass and a tread strip positioned as a crown on said carcass, comprising the steps of preparing and toric conforming a carcass not equipped with said tread strip; preparing said tread strip by the reduction to size of a section (3) of elastomeric material previously cut to a length greater than that of said strip; assembling said torically conformed carcass with said tread strip welded in the shape of a ring by means of a head-to-head joint of the two opposite extremities, in which said reduction to size of the section (3) of elastomeric material is executed by means of two cuts at a pre-set distance, executed simultaneously one on each extremity of said section, immediately before the joining together of the ends of tread strip.

14. A process according to claim 13, in which said cuts are executed by cutting the tread strip horizontally with respect thereto and in a direction transverse thereto.

15. A process according to claim 14, in which said cuts are executed by proceeding transversely to the section in a direction at an angle with respect to its longitudinal direction.

FIG 1

FIG 2

FIG 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB - A - 1 293 823 (ADOLF HERBERT) * Page 1, lines 27 ff; fig. 1,7 * | 1,5,7, 10 | B 29 D 30/46 B 29 D 30/30 |
| A | FR - A - 1 323 228 (THE GOODYEAR TIRE & RUBBER COMPANY) * Page 3, lines 8 ff; fig. 8 * | 1,10 | |
| A | DE - B - 1 301 047 (DUNLOP AG) * Column 1, lines 51 ff. * * Column 2, lines 16 ff; fig. 3 * | 1,10, 11 4 | |
| A | CH - A - 420 597 (FABRIK FÜR FIRESTONE PRODUKTE AG) * Page 1, lines 70 ff; fig. 2 * | 1,3, 14,15 | |
| D,A | EP - A2 - 0 418 849 (PIRELLI COORDINAMENTO PNEUMATICI SOCIETA) * Column 4, lines 46 ff. * * Column 6, lines 3 ff. * | 8 9 | TECHNICAL FIELDS SEARCHED (Int. Cl.5) B 26 D 1/00 B 26 D 3/00 B 26 D 7/00 B 29 D 30/00 |

The present search report has been drawn up for all claims

| Place of search | Date of completion of the search | Examiner |
|---|---|---|
| VIENNA | 03-05-1991 | SCHNEEMANN |